# EUROPEAN PATENT SPECIFICATION

(11) **EP 1 981 359 B1**
(45) Date of publication and mention of the grant of the patent: **08.12.2010**
(21) Application number: 07704926.0
(22) Date of filing: 17.01.2007
(51) Int. Cl.: A23L 1/29, A23L 2/52

(54) **IMPROVEMENTS IN AND RELATING TO NUTRITIONAL COMPOSITIONS**
VERBESSERUNGEN IN UND BEZÜGLICH NÄHRZUSAMMENSETZUNGEN
AMELIORATIONS APPORTEES ET SE RAPPORTANT A DES COMPOSITIONS NUTRITIONNELLES

(30) Priority: 18.01.2006 GB 0601003
(43) Date of publication of application: 22.10.2008
(73) Proprietor: SIS (SCIENCE IN SPORT) LIMITED, Blackburn, Lancashire BB6 8BB (GB)
(72) Inventor: LAWSON, Timothy, John, Blackburn Lancashire, BB6 8BB (GB); WHITFIELD, Alan, Blackburn Lancashire, BB6 8BB (GB); LAWSON, Simon, James, Blackburn Lancashire, BB6 8BB (GB)
(74) Representative: Johnson, Graham Pierssene
(86) International application number: PCT/GB2007/000144
(87) International publication number: WO 2007/083117

(56) References cited:
- US-A1- 2005 095 271
- ANONYMOUS: "GU Energy Gel" [Online] 5 August 2004 (2004-08-05), , XP002438098 Retrieved from the Internet: URL:http://web.archive.org/web/20040805130 151/http://www.gusports.com/html/gu_vanill a.htm> [retrieved on 2007-06-18] the whole document
- ANONYMOUS: "Inko Energy Gel" [Online] June 2004 (2004-06), , XP002438099 Retrieved from the Internet: URL:http://www.inko.de/scripts/generator.p hp?actEntry=3018&lang=0&editMode=0&MID=1,2 869,2891,2989,3006&p1=1> the whole document

## Description

### FIELD OF THE INVENTION

The invention relates to methods of manufacturing nutritional compositions, particularly isotonic gels, and to nutritional compositions.

### BACKGROUND TO THE INVENTION

When people exercise they perspire and the resultant loss of water may lead to dehydration, impaired heat dissipation, reduced exercise performance and potential health problems. Prolonged exercise may also deplete the carbohydrate energy stores of the body leading to reduced exercise performance. Ingesting both fluid and carbohydrate during exercise can replace some of the fluid lost and the energy stores used up and may enhance performance.

Ingesting water during exercise will restore fluid lost through sweat. The rate at which fluid balance is restored is determined by the rate at which ingested fluid empties from the stomach and is absorbed from the intestine into the blood. A key factor influencing gastric emptying is the volume of fluid in the stomach. However the rate of gastric emptying may be slowed proportionately with increasing glucose concentration above 80g l⁻¹. The composition of foodstuffs ingested during exercise may thus have a significant influence on fluid and energy replacement.

The addition of carbohydrate to a fluid replacement may enhance intestinal absorption rate, as well as maintaining blood glucose concentration and enhancing carbohydrate oxidation. ACSM guidelines recommend the ingestion of 30-60g/hr of carbohydrate throughout continuous moderate-to-high intensity exercise. Combining this with the consumption of water and electrolyte in the correct proportions may allow the maintenance of optimum performance.

The availability of adequate fluid and energy replacement can be limited to exercise environments by factors such as rules governing rest periods, or locations of aid stations on a race course, etc. To optimise this replacement several different electrolyte energy sources have been developed to aid fluid and energy replacement.

Known fluid replacements may be effective at allowing water and an energy source to be consumed simultaneously. However, there are situations where athletes and active people wish to take on board a concentrated energy source. Known fluid replacements may not be suitable for this purpose.

US 20050095271 discloses a nutritional composition in gel form containing carbohydrates, electrolytes, anti-oxidants, vitamines and amino acids.

It is known for athletes and active people to consume concentrated energy sources provided in the form of solid carbohydrates or gels that are hypertonic. However, these may cause problems associated with slow gastric emptying. They may also compromise hydration unless imbibed with significant quantities of hypotonic solution at the same time.

It is desirable for sports people to be able to separate the time when they consume a significant energy source from that at which they consume other fluids. Manufacturing a nutritional product which meets these requirements has however proved a challenge.

Accordingly, the present invention aims to address at least one disadvantage associated with the prior art whether discussed herein or otherwise.

### SUMMARY OF THE INVENTION

According to a first aspect of the present invention there is provided a method of manufacturing a nutritional composition comprising carbohydrate in an amount of at least 250g l⁻¹ of composition, said method comprising the steps of:
(i) combining a first gelling agent and water;
(ii) heating the mixture produced in step (i) to a temperature of between 60°C and 100°C;
(iii) combining a second gelling agent with the heated mixture of step (ii) with mixing; and
(iv) maintaining the mixture produced in step (iii) at a temperature of between 70°C and 100°C for between 10 and 120 minutes;
and wherein a carbohydrate component is combined with the mixture during one or more of said steps and wherein the composition has a tonicity of no greater than 350 mmol l⁻¹.

Suitably, substantially no carbohydrate component is added during step (i).

Suitably, step (i) comprises combining a first gelling agent, water and a sequestrant with mixing.

Suitably, step (i) comprises combining only water, a first gelling agent and a sequestrant.

The water used in step (i) may comprise water of tap-water quality. Alternatively, the water used in step (i) may comprise de-ionised water. In the case of de-ionised water the addition of sequestrant may be omitted.

Suitably, a carbohydrate component is combined with the mixture during step (iii). Suitably, substantially no carbohydrate component is added until step (iii). Suitably, substantially no carbohydrate component is added after step (iii).

Suitably, step (iii) comprises combining a carbohydrate component and a second gelling agent with the heated mixture of step (ii) with mixing.

Suitably, step (iv) comprises maintaining the mixture produced in step (iii) at a temperature of between 70°C and 100°C for between 10 and 120 minutes.

Suitably, step (iv) comprises adding water to the mixture of step (iii).

Suitably, step (iv) comprises maintaining the mixture produced in step (iii) at a temperature of between 70°C and 100°C for between 10 and 120 minutes and adding water to maintain the volume of the mixture.

Suitably, the method further comprises the step of:
(v) allowing the mixture of step (iv) to cool and/or separating the mixture into portions and/or filling moulds or containers.

Suitably, the nutritional composition produced by the method comprises carbohydrate in an amount of between 250g l⁻¹ and 500g l⁻¹ of composition.

The nutritional composition may comprise carbohydrate in an amount of at least 275g l⁻¹, for example at least: 300g l⁻¹; 325g l⁻¹; 350g l⁻¹; 375g l⁻¹; or 400g l⁻¹ of composition.

Suitably, the nutritional composition produced by the method comprises at least 1000Kcal l⁻¹ of composition.

Suitably, the nutritional composition produced by the method comprises a gel.

Suitably, the nutritional composition produced by the method is isotonic. The composition may for example have a tonicity of between 310 and 320 mmol l⁻¹.

Suitably, the composition has an osmolality of between 270 and 330 mOSmol l⁻¹.

The tonicity and osmolality of the composition may be measured using a Wescor Vapour Pressure Osmometer, using standard techniques as are well understood by those skilled in the art.

Suitably, the method comprises making a nutritional composition which comprises water in an amount of between 50% and 80% by weight, for example between 60% and 70% by weight, for example around 66% by weight.

Suitably, step (i) comprises combining the components with mixing at a temperature of 50°C or less. Step (i) may be performed at a temperature of 40°C or less, suitably at 30°C or less, for example at ambient temperature.

Suitably, in step (i) the components are mixed by stirring. Suitably, the stirring is continuous. Suitably, step (i) uses a high shear mixer to mix the components.

Suitably, in step (i) the components are combined in a jacketed steam pan.

Suitably, the first gelling agent comprises a gum. Suitably the first gelling agent comprises a polysaccharide. Suitably, the first gelling agent comprises gellan gum. The first gelling agent may alternatively comprise xanthan gum but gellan gum may be preferred.

Suitably, the method uses a first gelling agent, for example gellan gum, in an amount of between 0.5g and 2g per litre of final composition. The method may use a first gelling agent in an amount of between 0.8g and 1.6g per litre of final composition, for example in an amount of around 1.2g per litre of final composition.

Suitably, the method uses a first gelling agent, for example gellan gum, in an amount of between 0.001g and 0.005g per 1g of carbohydrate component, for example in an amount of around 0.003g per 1g of carbohydrate component.

A suitable sequestrant for use in the present invention is sodium citrate.

The combination of a sequestrant, for example sodium citrate, with the first gelling agent, for example gellan gum, may allow the first gelling agent to substantially fully hydrate. The sequestrant may prevent the gelling agent from gelling until substantially fully hydrated. Suitably, cold mixing the gelling agent and sequestrant using a high shear mixer may ensure maximum hydration of the gelling agent.

Suitably, the sequestrant, for example sodium citrate, is used in an amount of between 0.0005g and 0.005g per 1g of carbohydrate component, for example in an amount of around 0.001g per 1g of carbohydrate component.

Suitably, the ratio of sequestrant to first gelling agent is between 1:2 and 1:4 by weight, for example around 1:3 by weight.

Suitably, step (i) is performed until the first gelling agent is dispersed, for example for between 5 and 20 minutes.

Suitably, the amount of water used in step (i) corresponds to about 90% of the water content of the final composition produced by the method.

Suitably, step (ii) comprises heating the components to a temperature of between 75°C and 95°C, for example between 80°C and 90°C. Step (ii) may be performed at a temperature of at least 75°C, for example at least: 80°C°; 85°C; or 90°C. Step (ii) may be performed at a temperature of 95°C or below, for example at or below: 90°C; 85°C; or 80°C.

The use of such temperatures may suitably increase the rate at which the carbohydrate dissolves and/or disperses.

Suitably, in step (ii) the components are mixed by stirring. Suitably, the stirring is continuous. This may ensure that the mixture is not locally overheated and may minimise the risk of components burning and/or degrading. Suitably, step (ii) uses a high shear mixer to mix the components.

Mixing, suitably stirring, may be continuous from step (ii) through to and including step (iv) of the method.

Suitably, step (ii) is performed in a jacketed steam pan. Suitably, the jacketed steam pan is the same pan in which the components are combined in step (i).

Alternatively, the mixture may be heated by passing it through a heat exchanger. Alternatively, the mixture may be heated using live steam. In that case the steam may also cause the water content of the mixture to increase.

Suitably, step (ii) is performed for between 30 minutes and 120 minutes, for example around 60 minutes. Suitably, carbohydrate component is added steadily over this time. This may ensure that the temperature of the mixture can be maintained in the desired range when cold carbohydrate is added.

Suitably, step (iii) comprises combining the components with mixing at a temperature of between 75°C and 95°C, for example between 80°C and 90°C. Step (iii) may be performed at a temperature of at least 75°C, for example at least: 80°C°; 85°C; or 90°C. Step (iii) may be performed at a temperature of 95°C or below, for example at or below: 90°C; 85°C; or 80°C.

Suitably, in step (iii) the components are mixed by stirring. Suitably, the stirring is continuous. Suitably, step (iii) uses a high shear mixer to mix the components.

Suitably, in step (iii) the components are combined in a jacketed steam pan. Suitably, in step (iii) the carbohydrate component and second gelling agent are added to the heated mixture of step (ii). The carbohydrate component and second gelling agent may thus be added into the jacketed steam pan used in step (ii).

Suitably, the method uses carbohydrate in an amount such that it does not exceed its limit of solubility in the nutritional composition. Suitably, the carbohydrate is added gradually to ensure that it dissolves and stays in solution. Use of a high shear mixer may assist to pull the carbohydrate into solution. Suitably, the gelling agents are selected to be compatible with the carbohydrate such that they maintain it in solution.

Suitably, the first and second gelling agents, for example gellan gum and xanthan gum, have a synergistic effect when used together. Suitably, the first gelling agent, suitably gellan gum, is added to the mixture when it is cold and heated. Suitably, the second gelling agent, suitably xanthan gum, is not added until the mixture is heated as it may make a cold mixture too viscous. The combination of gelling agents and method of manufacture of the composition may provide a stable gel. The combination of gelling agents may have good shearing characteristics and gives the nutritional composition good mouth-feel. Suitably, the method does not result in the gelling agents substantially binding water. Instead, the gelling agents may use the space the water provides to stretch out.

Suitably, the second gelling agent comprises a gum. Suitably, the second gelling agent is distinct from the first gelling agent. Suitably the second gelling agent comprises a polysaccharide, for example a long chain polysaccharide. Suitably, the second gelling agent comprises xanthan gum.

Suitably, the method uses a second gelling agent, for example xanthan gum, in an amount of between 0.5g and 2g per litre of final composition. The method may use a first gelling agent in an amount of between 0.8g and 1.6g per litre of final composition, for example in an amount of around 1.2g per litre of final composition.

Suitably, the method uses a second gelling agent, for example xanthan gum, in an amount of between 0.001g and 0.005g per 1g of carbohydrate component, for example in an amount of around 0.003g per 1g of carbohydrate component.

Suitably, the first and second gelling agents are used in a ratio of between 1:2 and 2:1 by weight, for example around 1:1 by weight.

Suitably, the carbohydrate component comprises a maltodextrin. Alternatively, the carbohydrate component may comprise starch. Preferably the carbohydrate component comprises a maltodextrin of low dextrose equivalent, for example a maltodextrin having a dextrose equivalent of 15% or less. The carbohydrate component may have an average molecular weight of greater than 1800.

Suitably, the carbohydrate component is not hygroscopic. The composition may be such that hygroscopic elements are minimised which may ensure that the composition readily gives up free water.

Suitably, the carbohydrate component, is used in an amount of between 250g and 500g per litre of final composition. The method may use a carbohydrate component in an amount of between 325g and 425g per litre of final composition, for example in an amount of around 375g per litre of final composition.

The method may employ a number of distinct carbohydrate components but they may be used in a combined amount corresponding to the amounts given herein for "the carbohydrate component".

Suitably, the ratio of carbohydrate component to first gelling agent is between 250:1 and 350:1 by weight, for example around 310:1 by weight.

Suitably, step (iii) is performed for between 10 minutes and 90 minutes, for example up to 60 minutes. The carbohydrate component and second gelling agent may be added over a period of between 5 minutes and 90 minutes. The mixture may then be stirred with heating for between a further 10 minutes and 60 minutes. This may ensure the carbohydrate component is fully dissolved and/or dispersed.

During step (iv) the mixture may contain carbohydrate at a level that is not normally stable in a cold solution. Suitably, on cooling of the mixture the carbohydrate may however remain dissolved.

Suitably, step (iv) comprises maintaining the mixture at a temperature of between 75°C and 100°C, for example between 80°C and 95°C. Step (iv) may be performed at a temperature of at least 80°C, for example at least: 85°C; 90°C or 95°C. Step (iv) may be performed at a temperature of 100°C or below, for example at or below: 95°C; 90°C; or 85°C.

Suitably, in step (iv) the components are mixed by stirring. Suitably, the stirring is continuous. Suitably, step (iv) uses a high shear mixer to mix the components.

Suitably, step (iv) is performed in a jacketed steam pan. Suitably, step (iv) is performed in the same jacketed steam pan as step (iii).

Suitably, step (iv) comprises adding water to adjust, for example to maintain, the volume of the composition. Suitably, said water is added in an amount of about 10% of the amount of water in the final composition.

The water may be added cold but the mixture may be heated to maintain its temperature as the water is added.

Suitably, method uses water in an amount such that the ratio of water to carbohydrate component in the final composition is between 1.5:1 and 2.5:1 by weight, for example around 2:1 by weight.

The method may use water in an amount such that the final composition comprises water in an amount of between 0.5 litres and 0.9 litres per litre of final composition, for example around 0.65 litres per litre of final composition.

Suitably, step (iv) is performed for between 10 minutes and 60 minutes, suitably between 20 minutes and 40 minutes, for example around 30 minutes. Water may be added throughout this time.

Step (v) suitably comprises the mixture transforming from a flowable liquid to a gel at a transition temperature of around 40°C.

Suitably, step (v) comprises transferring the mixture to a vessel to cool. Suitably, said vessel comprises a sterile tank which is suitably sealed. Suitably, the mixture is not agitated or otherwise mixed while cooling.

Step (v) may comprise separating the mixture into portions and/or filling moulds or containers, for example sachets, with the mixture. This step may be performed whilst the mixture is warm. The mixture may for example be transferred into sachets and then allowed to cool and set. The mixture may be transferred substantially as soon as step (iv) is complete and may thus be at 75°C or more. Thus, the method may comprise a hot-fill process. Alternatively it may be transferred once it has partially cooled but before it sets.

Suitably, during step (v) the mixture is allowed to cool to ambient temperature, suitably after having been separated into portions and/or filled into containers, for example sachets.

Step (v) may include a filtering step. Suitably the mixture is passed through a filter to remove particles greater than 0.5 mm.

Suitably, the method pasteurises the nutritional composition during production. Thus, a minimum amount of preservative may be required. Minimising the level of preservative may minimise the number of molecules in solution and may thus allow more carbohydrate to be added. Minimising the level of preservative may also allow the mixture to have a higher pH. The preservative may be more effective at a lower pH. pH may be controlled by, for example, the addition of citric acid. If a lower amount of preservative is required, a lower amount of citric acid may be added. This may allow for carbohydrate to be included at greater levels whilst maintaining the nutritional composition below the isotonic limit.

The nutritional composition may comprise one or more of: flavour enhancer; anti-oxidant; preservative; flavourings; and/or sweetener.

Suitably, the method comprises adding one or more of: flavour enhancer; anti-oxidant; preservative; flavouring; and/or sweetener in step (iv).

Suitably, the method comprises adding a flavour enhancer. The flavour enhancer may comprise sodium chloride. Suitably, the flavour enhancer is added in an amount of around 0.01 to 0.5g per litre of final composition, for example in an amount of around 0.1g per litre of final composition.

Sodium chloride may be added to enhance flavour and/or to provide positive ions which may activate the first gelling agent, suitably gellan gum. Suitably, sodium chloride is added in an amount of between 0.01g and 0.5g per litre of final composition, for example in an amount of around 0.1g per litre of final composition, to activate gellan gum and may also serve as a flavour enhancer.

Suitably, the method comprises adding an anti-oxidant. The anti-oxidant may comprise, for example, ascorbic acid. Suitably, the anti-oxidant is added in an amount of between 0.005g to 0.1g per litre of final composition, for example in an amount of around 0.03g per litre of final composition.

The method may comprise adding citric acid. Citric acid may drop the pH of the nutritional composition. This may ensure that the preservative works and may also improve the gel strength. For example, it may improve the gel strength of gellan gum. The citric acid may be added in an amount of between 0.01 and 5g per litre of final composition, for example in an amount of around 1g per litre of final composition.

Suitably, the method comprises adding a preservative. The preservative may comprise potassium sorbate and/or sodium benzoate, suitably both. Suitably, the preservative is added in an amount of between 0.01g and 1g per litre of final composition, for example in an amount of around 0.4g per litre of final composition.

Suitably, the method comprises adding flavouring. The flavouring may comprise fruit flavouring. Suitably, the flavouring is added in an amount of between 1g and 10g per litre of final composition, for example in an amount of around 4g per litre of final composition.

Suitably, the method comprises adding sweetener. The sweetener may comprise acesuphamine K. The sweetener may be added in an amount of between 0.05g and 1g per litre of final composition, for example in an amount of around 0.3g per litre of final composition.

The nutritional composition may comprise nutrients and/or food supplements such as for example protein and/or caffeine and/or electrolytes. Suitably, these may be added to the mixture in step (iv). Suitably, such nutrients and/or food supplements are added in such amounts that the final composition comprises around 300 mmol of dissolved solids per litre.

According to a second aspect of the present invention there is provided a nutritional product which comprises carbohydrate in an amount of at least 250g l⁻¹ of composition and is a gel and wherein the composition has a tonicity of no greater than 350 mmol l⁻¹ and is manufactured according to the method of the first aspect.

The composition may comprise any feature as described in relation to the first aspect.

### BRIEF DESCRIPTION OF THE DRAWINGS

The present invention will now be illustrated by way of example with reference to the accompanying drawings in which:

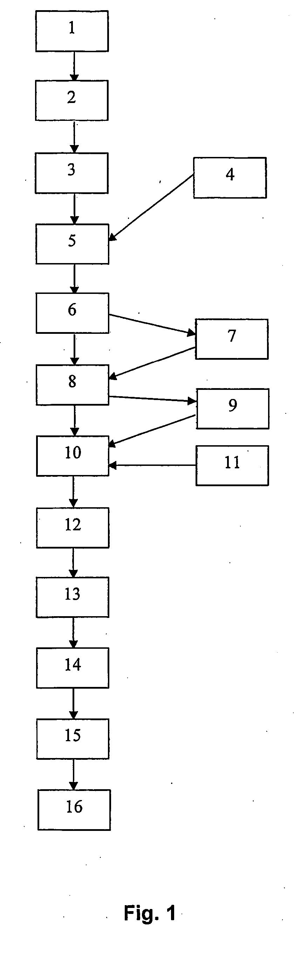

Figure 1 is a flow diagram illustrating a manufacturing method.

### DESCRIPTION OF THE PREFERRED EMBODIMENTS

A nutritional composition comprising carbohydrate in an amount of 360g l⁻¹ of composition was manufactured according to the method shown in outline by Figure 1.

The items outlined by Figure 1 are as follows:
- 1 -: Purchase
- 2 -: Delivery
- 3 -: Storage
- 4 -: Water
- 5 -: Weighing/Measuring
- 6 -: Mixing (i)
- 7 -: Heating (ii)
- 8 -: Mixing (iii)
- 9 -: Heating
- 10 -: Equalising (iv)
- 11 -: Water
- 12 -: Filtration and Transfer
- 13 -: Cooling (v)
- 14 -: Analysis
- 15 -: Portioning/Packing
- 16 -: Storage

480g of gellan gum (first gelling agent) and 160g of sodium citrate (sequestrant) were combined with 280 litres of water in a jacketed steam pan at ambient temperature (step (i)). The gelling agent and sequestrant components were added simultaneously to the water and mixed with constant stirring by a high shear mixer.

The mixture held within the pan was then heated with to a temperature of between 80°C and 90°C (step (ii)). During this step the mixture was stirred continuously by the high shear mixer.

Following this a carbohydrate component was added to the mixture in the pan (step (iii)) together with 480g of xanthan gum (second gelling agent). The carbohydrate component comprised 148.4kg of a maltodextrin of low dextrose equivalent. Heating of the mixture was continued during this operation with the target temperature being 80°C to 90°C. The xanthan gum and carbohydrate component were added to the mixture with constant stirring with the high shear mixer with the xanthan gum being added first.

During step (iii) a number of other components were also added to the mixture. These were: 800g orange flavouring; 800g lemon flavouring; 400g citric acid; 120g acesulfamine K (sweetener); 80g potassium sorbate (preservative); 80g sodium benzoate; 40g sodium chloride (flavour enhancer); 10g ascorbic acid (anti-oxidant); and 1g riboflavin (vitamin B2).

Step (iii) was performed over a period of 60 minutes with the components being added steadily over that time with mixing.

Following step (iii) the mixture was maintained in the pan at a temperature of between 80°C to 95°C and stirred constantly with the high shear mixer (step (iv)) to ensure full dissolution/dispersion of the carbohydrate. Water was added to the mixture steadily to adjust its volume over a period of 30 minutes to adjust and maintain the total volume at 400 litres.

Finally, the mixture was removed from the pan and allowed to cool below 40°C (step (v)) and then separated into portions.

The composition of the 400 litres of nutritional gel produced is shown by table 1.

| TABLE 1 | |
|---|---|
| Component | Amount/g |
| Water | 269,800 |
| Maltodextrin | 148,400 |
| Orange Flavouring | 800 |
| Lemon Flavouring | 800 |
| Gellan Gum | 480 |
| Xanthan Gum | 480 |
| Citric Acid | 400 |
| Sodium Citrate | 160 |
| Acesulfame K | 120 |
| Potassium Sorbate | 80 |
| Sodium Benzoate | 80 |
| Sodium Chloride | 40 |
| Ascorbic Acid | 10 |
| Riboflavin | 1 |

This composition comprised a gel having carbohydrate in an amount of about 360 g l⁻¹ of composition and a tonicity of less than 350 mmol l⁻¹.

In an alternative embodiment, step (v) of the method can be modified by transferring the mixture to containers immediately upon the end of step (iv).

It will be appreciated that preferred embodiments of the present invention may provide a method of manufacturing a nutritional composition for athletes and active people which comprises a significant level of carbohydrate as an energy source.

Such compositions may be light on the stomach, easy to administer, easy to digest and promote hydration. Such compositions may allow the time when persons consume a significant energy boost to be managed independently of their hydration requirements. The ingestion of water or other hypotonic solution for re-hydration may thus be consumed sometime before, during, or after consumption of the gel.

The method of preferred embodiments may ensure that the nutritional composition does not break down too easily, and the carbohydrate does not come out of solution during manufacture. The method may give the nutritional composition properties that may ensure the duodenal osmo-receptors do not act to slow gastric emptying. It may also ensure a very palatable product that has a relatively long shelf life.

Nutritional compositions made by the method of preferred embodiments may comprise an isotonic gel which combines higher molecular weight carbohydrate with a gelling agent. Such compositions may be gels or jelly like compositions which are stable, have good mouth-feel, a tonicity of no greater than 350 mmol l⁻¹, and can be packaged so that they can be easily carried and consumed.

The nutritional composition of preferred embodiments may facilitate a significantly lower fall in blood volume and a greater rise in blood glucose during exercise than known fluid replacements.

Attention is directed to all papers and documents which are filed concurrently with or previous to this specification in connection with this application and which are open to public inspection with this specification.

## Claims

1. A method of manufacturing a nutritional composition comprising carbohydrate in an amount of at least 250g l⁻¹ of composition, said method comprising the steps of:
(i) combining a first gelling agent and water;
(ii) heating the mixture produced in step (i) to a temperature of between 60°C and 100°C;
(iii) combining a second gelling agent with the heated mixture of step (ii) with mixing; and
(iv) maintaining the mixture produced in step (iii) at a temperature of between 70°C and 100°C for between 10 and 120 minutes;
and wherein a carbohydrate component is combined with the mixture during one or more of said steps and wherein the composition has a tonicity of no greater than 350 mmol l⁻¹.

2. A method according to Claim 1, wherein step (i) comprises combining a first gelling agent, water and a sequestrant with mixing.

3. A method according to Claim 1 or 2, wherein a carbohydrate component which comprises a maltodextrin or starch is combined with the mixture during step (iii).

4. A method according to any preceding claim, wherein step (iv) comprises maintaining the mixture produced in step (iii) at a temperature of between 70°C and 100°C for between 10 and 120 minutes and adding water to maintain the volume of the mixture.

5. A method according to any preceding claim, wherein the method further comprises the step of:
(v) allowing the mixture of step (iv) to cool and/or separating the mixture into portions and/or filling moulds or containers.

6. A method according to any preceding claim, wherein the nutritional composition produced by the method comprises carbohydrate in an amount of between 250g l⁻¹ and 500g l⁻¹ of composition.

7. A method according to any preceding claim, wherein the nutritional composition produced by the method comprises a gel.

8. A method according to any preceding claim, wherein the method comprises making a nutritional composition which comprises water in an amount of between 50% and 80% by weight.

9. A method according to any preceding claim, wherein the first gelling agent comprises a gum and wherein the method uses a first gelling agent in an amount of between 0.5g and 2g per litre of final composition and wherein the method uses a first gelling agent in an amount of between 0.001g and 0.005g per 1g of carbohydrate component.

10. A method according to any preceding claim, wherein the second gelling agent comprises a gum and wherein the method uses a second gelling agent in an amount of between 0.5g and 2g per litre of final composition and wherein the method uses a second gelling agent in an amount of between 0.001g and 0.005g per 1g of carbohydrate component and wherein the second gelling agent is distinct from the first gelling agent.

11. A method according to any preceding claim, wherein the first gelling agent comprises gellan gum and the second gelling agent comprises xanthan gum.

12. A method according to any preceding claim, wherein the carbohydrate component comprises a maltodextrin and wherein a sequestrant is used in an amount of between 0.0005g and 0.005g per 1g of carbohydrate component.

13. A method according to any preceding claim, wherein step (i) is performed until the first gelling agent is dispersed and wherein in step (ii) the components are mixed by stirring and wherein step (ii) is performed for between 30 minutes and 120 minutes.

14. A method according to any preceding claim, wherein in step (iii) the carbohydrate component and second gelling agent are added to the heated mixture of step (ii) and wherein step (iii) is performed for between 10 minutes and 90 minutes and wherein step (v) includes a filtering step and wherein the method pasteurises the nutritional composition during production and wherein the method comprises adding one or more of: flavour enhancer; anti-oxidant; preservative; flavouring; and/or sweetener in step (iv).

15. A nutritional product which comprises carbohydrate in an amount of at least 250g l⁻¹ of composition and is a gel and wherein the composition has a tonicity of no greater than 350 mmol l⁻¹ and is manufactured according to the method of any of Claims 1 to 14.

## Patentansprüche

1. Verfahren zur Herstellung einer Nahrungszusammensetzung, die Kohlehydrate in einer Menge von mindestens 250 g/l der Zusammensetzung umfasst, wobei das Verfahren die Stufen:
(i) Kombinieren von einem ersten Gelbildner und Wasser;
(ii) Erhitzen des in Stufe (i) hergestellten Gemischs auf eine Temperatur zwischen 60 °C und 100 °C;
(iii) Kombinieren eines zweiten Gelbildners mit dem erhitzten Gemisch von Stufe (ii) unter Mischen; und
(iv) Halten des in Stufe (iii) hergestellten Gemischs über zwischen 10 und 120 min bei einer Temperatur von zwischen 70 °C und 100 °C; umfasst
und wobei eine Kohlehydratkomponente mit dem Gemisch während einer oder mehreren der Stufen kombiniert wird und wobei die Zusammensetzung eine Tonizität von nicht größer als 350 mmol l⁻¹ aufweist.

2. Verfahren nach Anspruch 1, wobei die Stufe (i) das Kombinieren von einem ersten Gelbildner, Wasser und einem Komplexbildner unter Mischen umfasst.

3. Verfahren nach Anspruch 1 oder 2, wobei eine Kohlehydratkomponente, ein Maltodextrin oder Stärke umfasst, mit dem Gemisch während der Stufe (iii) kombiniert wird.

4. Verfahren nach einem der vorhergehenden Ansprüche, wobei die Stufe (iv) das Halten des in Stufe (iii) hergestellten Gemischs über zwischen 10 und 120 min bei einer Temperatur von zwischen 70 °C und 100 °C und die Zugabe von Wasser zum Beibehalten des Volumens des Gemisches umfasst.

5. Verfahren nach einem der vorhergehenden Ansprüche, wobei das Verfahren ferner die Stufe:
(v) Abkühlenlassen des Gemischs von Stufe (iv) und/oder Aufteilen des Gemischs in Portionen und/oder Füllen in Formen oder Behälter umfasst.

6. Verfahren nach einem der vorhergehenden Ansprüche, wobei die durch das Verfahren hergestellte Nahrungszusammensetzung Kohlehydrate in einer Menge von zwischen 250 g/l und 500 g/l der Zusammensetzung umfasst.

7. Verfahren nach einem der vorhergehenden Ansprüche, wobei die durch das Verfahren hergestellte Nahrungszusammensetzung ein Gel umfasst.

8. Verfahren nach einem der vorhergehenden Ansprüche, wobei das Verfahren das Herstellen einer Nahrungszusammensetzung umfasst, die Wasser in einer Menge von zwischen 50 und 80 Gew.-% umfasst.

9. Verfahren nach einem der vorhergehenden Ansprüche, wobei der erste Gelbildner einen Gummi umfasst und wobei das Verfahren einen ersten Gelbildner in einer Menge von zwischen 0,5 und 2 g pro Liter der fertigen Zusammensetzung verwendet und wobei das Verfahren einen ersten Gelbildner in einer Menge von zwischen 0,001 g und 0,005 g pro 1 g Kohlehydratkomponente verwendet.

10. Verfahren nach einem der vorhergehenden Ansprüche, wobei der zweite Gelbildner einen Gummi umfasst und wobei das Verfahren einen zweiten Gelbildner in einer Menge von zwischen 0,5 und 2 g pro Liter der fertigen Zusammensetzung verwendet und wobei das Verfahren einen zweiten Gelbildner in einer Menge von zwischen 0,001 g und 0,005 g pro 1 g der Kohlehydratkomponente verwendet und wobei der zweite Gelbildner von dem ersten Gelbildner verschieden ist.

11. Verfahren nach einem der vorhergehenden Ansprüche, wobei der erste Gelbildner Gellangummi umfasst und der zweite Gelbildner Xanthangummi umfasst.

12. Verfahren nach einem der vorhergehenden Ansprüche, wobei die Kohlehydratkomponente ein Maltodextrin umfasst und wobei ein Komplexbildner in einer Menge von zwischen 0,0005 g und 0,005 g pro 1 g der Kohlehydratkomponente verwendet wird.

13. Verfahren nach einem der vorhergehenden Ansprüche, wobei die Stufe (i) durchgeführt wird, bis der erste Gelbildner dispergiert ist, und wobei in der Stufe (ii) die Komponenten durch Rühren gemischt werden und wobei die Stufe (ii) über zwischen 30 min und 120 min durchgeführt wird.

14. Verfahren nach einem der vorhergehenden Ansprüche, wobei in der Stufe (iii) die Kohlehydratkomponente und der zweite Gelbildner zu dem erhitzten Gemisch von Stufe (ii) gegeben werden und wobei die Stufe (iii) über zwischen 10 min und 90 min durchgeführt wird und wobei die Stufe (v) eine Filtrierstufe umfasst und wobei das Verfahren die Nahrungszusammensetzung während der Herstellung pasteurisiert und wobei das Verfahren die Zugabe von einer oder mehreren Komponenten von einem Aromaverstärker, Antioxidationsmittel, Konservierungsmittel, Aromatisierungsmittel und/oder einem Süßungsmittel in der Stufe (iv) umfasst.

15. Nahrungsprodukt, das Kohlehydrate in einer Menge von mindestens 250 g/l der Zusammensetzung umfasst und das ein Gel ist und wobei die Zusammensetzung eine Tonizität von nicht größer als 350 mmol l⁻¹ aufweist und gemäß dem Verfahren nach einem der Ansprüche 1 bis 14 hergestellt wird.

## Revendications

1. Procède de fabrication d'une composition nutritionnelle comprenant un glucide en une quantité d'au moins 250 g·l⁻¹ de composition, ledit procédé comprenant les étapes consistant à :
(i) combiner un premier agent gélifiant et de l'eau ;
(ii) chauffer le mélange produit à l'étape (i) à une température comprise entre 60°C et 100 °C ;
(iii) combiner un deuxième agent gélifiant avec le mélange chauffé de l'étape (ii) sous mélange ; et
(iv) maintenir le mélange produit dans l'étape (iii) à une température comprise entre 70 °C et 100 °C durant entre 10 et 120 minutes ;
et **caractérisé en ce qu'**un composant glucidique est combiné avec le mélange pendant une ou plusieurs desdites étapes et dans lequel la composition a une tonicité de pas plus de 350 mmol·l⁻¹.

2. Procédé selon la revendication 1, dans lequel l'étape (i) comprend la combinaison d'un premier agent gélifiant, d'eau et d'un agent séquestrant sous mélange.

3. Procédé selon la revendication 1 ou 2, **caractérisé en ce qu'**un composant glucidique qui comprend une maltodextrine ou un amidon est combiné avec le mélange pendant l'étape (iii).

4. Procédé selon l'une quelconque des revendications précédentes, dans lequel l'étape (iv) comporte le maintien du mélange produit dans l'étape (iii) à une température comprise entre 70 °C et 100 °C durant entre 10 et 120 minutes et l'ajout d'eau pour maintenir le volume du mélange.

5. Procédé selon l'une quelconque des revendications précédentes, dans lequel le procédé comprend en outre l'étape consistant à :
(v) laisser refroidir Je mélange de l'étape (iv) et/ou séparer le mélange en portions et/ou remplir des moules ou des récipients.

6. Procédé selon l'une quelconque des revendications précédentes, dans lequel la composition nutritionnelle produite par le procédé comprend un glucide en une quantité comprise entre 250 g·l⁻¹ et 500 g·l⁻¹ de composition.

7. Procédé selon l'une quelconque des revendications précédentes, dans lequel la composition nutritionnelle produite par le procédé comprend un gel.

8. Procédé selon l'une quelconque des revendications précédentes, dans lequel le procédé comporte la préparation d'une composition nutritionnelle qui comprend de l'eau en une quantité comprise entre 50 % et 80 % en poids.

9. Procédé selon l'une quelconque des revendications précédentes, dans lequel le premier agent gélifiant comprend une gomme et dans lequel le procédé utilise un premier agent gélifiant en une quantité comprise entre 0,5 g et 2 g par litre de composition finale et où le procédé utilise un premier agent gélifiant en une quantité comprise entre 0,001 g et 0,005 g pour 1 g de composant glucidique.

10. Procédé selon l'une quelconque des revendications précédentes, dans lequel le deuxième agent gélifiant comprend une gomme et où le procédé utilise un deuxième agent gélifiant en une quantité comprise entre 0,5 g et 2 g par litre de composition finale et où le procédé utilise un deuxième agent gélifiant en une quantité comprise entre 0,001 g et 0,005 g pour 1 g de composant glucidique et où le deuxième agent gélifiant est différent du premier agent gélifiant.

11. Procédé selon l'une quelconque, des revendications précédentes, dans lequel le premier agent gélifiant comprend de la gomme gellane et le deuxième agent gélifiant comprend de la gomme xanthane.

12. Procédé selon l'une quelconque des revendications précédentes, dans lequel le composant glucidique comprend une maltodextrine et où un séquestrant est utilisé en une quantité comprise entre 0,0005 g et 0,005 g pour 1 g de composant glucidique.

13. Procédé selon l'une quelconque des revendications précédentes, dans lequel l'étape (i) est effectuée jusqu'à ce que le premier agent gélifiant soit dispersé et où, dans l'étape (ii), les composants sont mélangés par agitation et où l'étape (ii) est effectuée durant entre 30 minutes et 120 minutes.

14. Procédé selon l'une quelconque des revendications précédentes, dans lequel dans l'étape (iii) le composant glucidique et le deuxième agent gélifiant sont ajoutés au mélange chauffé de l'étape (ii) et où l'étape (iii) est effectuée durant entre 10 minutes et 90 minutes et où l'étape (v) comprend une étape de filtrage et où le procédé pasteurise la composition nutritionnelle pendant la production et où le procédé comprend l'ajout d'un ou plusieurs rehausseurs d'arôme ; antioxydants ; conservateurs ; arômes ; et/ou édulcorants à l'étape (iv).

15. Produit nutritionnel qui comprend un glucide en une quantité d'au moins 250 g·l⁻¹ de composition, qui est un gel, et dans lequel la composition a une tonicité de pas plus de 350 mmol·l⁻¹ et est préparée selon le procédé de l'une quelconque des revendications 1 à 14.
